# EUROPEAN PATENT APPLICATION

(11) **EP 4 764 741 A1**
(43) Date of publication of application: **24.06.2026**
(21) Application number: 24222566.2
(22) Date of filing: 20.12.2024
(51) Int. Cl.: G05B 13/02, G05B 17/02, G05B 15/02

(54) **SOLUTIONS FOR DETERMINING AT LEAST ONE SIMULATION PARAMETER OF A SIMULATION FOR PRE-TRAINING A REINFORCEMENT LEARNING, RL, BASED CONTROLLER AND CONTROLLER**

(71) Applicant: Mitsubishi Electric Corporation, Tokyo 100-8310 (JP)
(72) Inventor: Tanaka, Ryuta, Livingston, EH54 5DJ (GB)
(74) Representative: Pfenning, Meinig & Partner mbB

(57) **Abstract**

The invention concerns a method for determining at least one simulation parameter of a simulation for pre-training a reinforcement learning, RL, based controller (14) for an air conditioning, AC, system or a heating, ventilation, and air conditioning, HVAC, system (10). The invention also concerns a system (100) for determining at least one simulation parameter of a simulation for pre-training an RL-based controller (14) for an AC system or an HVAC system (10). Still further, the invention also concerns a RL based controller (14).

## Description

The invention concerns a method for determining at least one simulation parameter of a simulation for pre-training a reinforcement learning, RL, based controller for an air conditioning, AC, system or a heating, ventilation, and air conditioning, HVAC, system. The invention also concerns a system for determining at least one simulation parameter of a simulation for pre-training an RL-based controller for an AC system or an HVAC system. Still further, the invention concerns an RL based controller.

It is known to use reinforcement learning for HVAC controllers, see e.g. US 2012 0040601 A1. Reinforcement learning is a method through which a computerized system and in particular an artificial intelligence implemented in the HVAC controller and e.g. comprising a neural network learns optimal actions by interacting with an environment. This approach involves iterative trial and error to discover suitable actions performed by an agent, such as the HVAC controller, that yield favorable outcomes based on a criterion known as rewards.

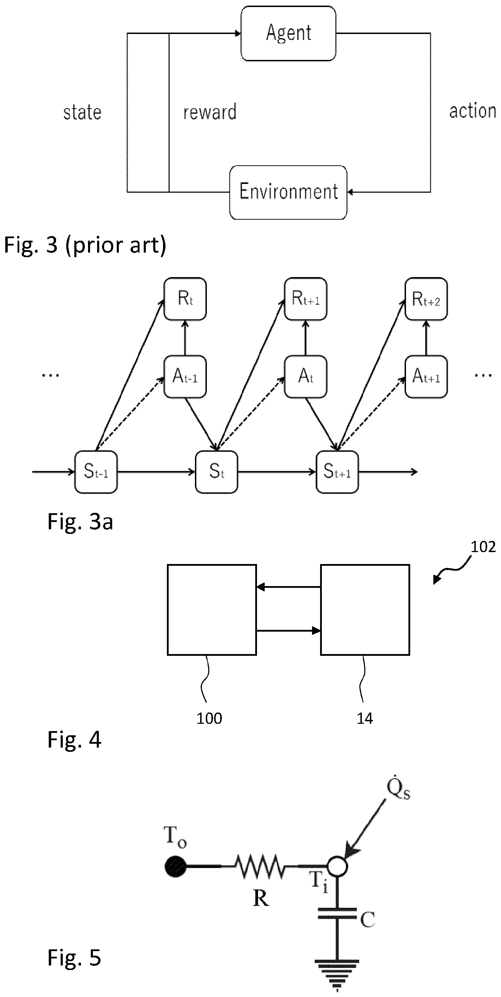

Fig. 3 schematically illustrates such a known reinforcement learning process. The features depicted in Fig. 3 can be defined as follows:
Agent: The entity being trained. It interacts with the environment and chooses actions.
Environment: The place in which the agent exists, in which actions are taken. The agent's actions affect the environment, and the environment provides rewards or feedback to the agent.
Action: The choices the agent can make within the environment.
Reward: The evaluation or value assigned to the agent's actions. The agent aims to learn actions that maximize the reward over time.
State: The situation of an agent within the environment. It provides information for the agent to make decisions about its actions. In the process of reinforcement learning, the agent selects actions based on the current state and receives rewards as a result.

Simulations are often used for a pre-training of the controller/agent. For example, pre-training of the reinforcement learning agent is done through simulations over a period of simulated time before deploying the reinforcement learning agent into a real-world environment. The simulations and thus the pre-training typically include a sequence of iterations including determining and performing actions by the agent based on current states and feeding back resulting state changes to the agent along with observed rewards.

Existing solutions sometimes do not achieve desired results, e.g. because the control actions do not accurately result in desired outcomes and/or because the pre-training is inefficient.

The present invention seeks to improve RL-based AC/HVAC controllers, in particular with regard to their pre-training.

This object is addressed by the subject-matters of the independent claims. Preferred embodiments are defined in the dependent claims, in this description and in the figures.

Accordingly, a method for determining at least one simulation parameter of a simulation for pre-training a reinforcement learning, RL, based controller for an air conditioning, AC, system or a heating, ventilation, and air conditioning, HVAC, system is disclosed, the method comprising: determining at least one of the following simulation parameters a) and b) based on a space model which models a space to which the system, i.e. the AC or HVAC system, is applied and/or based on a system model, i.e. of the AC or HVAC system,:
a) an extent of past state data based on which the controller is to be pre-trained in at least one pre-training iteration of the simulation;
b) a pre-training temporal period that is to be covered by the simulation.

It has been recognized that during pre-training by the simulation and also during an optional additional learning when deployed in the real-world, often only a current time step is fed back to the agent as a state variable. This makes it difficult for the agent to correctly take into account hysteresis in the system. Some existing solutions already consider historical state data, too. For example, in the following paper the behavior of the environment is simulated using LSTM (Long Short-Term Memory). The feedback as state variables includes data up to six time steps prior, along with the current state.: Christian Blad, Simon Bøgh, Carsten Skovmose Kallesøe, Data-driven Offline Reinforcement Learning for HVAC-systems, Energy, Volume 261, Part B, 2022, 125290, ISSN 0360-5442.

Yet, even when taken historical data into account, the outcome can still be unsatisfying. For example, the controller designer's intuition and experience are typically relied on as key factors in determining how long or how much data should be retained to allow the controller to learn the hysteresis of the system from the retained data. However, the data retention period can be selected too short to adequately account for hysteresis, while in other cases the data retention period can be too long and excessive time is thus required for controller training.

In this context, "learning hysteresis" concerns a decision making by the controller based on incorporating past data, even though reinforcement learning usually assumes the Markov property where only the current state matters. By "learning" this hysteresis effect, the controller/agent can better handle situations where past actions still influence the present, improving stability and effectiveness in complex environments. A further example in this regard can be found in: Alberto Silvestri, Davide Coraci, Silvio Brandi, Alfonso Capozzoli, Esther Borkowski, Johannes Köhler, Duan Wu, Melanie N. Zeilinger, Arno Schlueter, Real building implementation of a deep reinforcement learning controller to enhance energy efficiency and indoor temperature control, Applied Energy, Volume 368, 2024, 123447, ISSN 0306-2619, https://doi.org/10.1016/j.apenergy.2024.123447.

For this reason, the present disclosure seeks to determine the above-defined simulation parameter a) that corresponds to and/or resembles a respective data retention period in a more rule-based manner and specifically based the space model and/or device model.

Additionally or alternatively, to improve the efficiency of controller training through simulation, the simulation time required according to the above-defined simulation parameter b) can be determined from the parameters of the space model and/or device model. That is, a length of the simulation period to be covered during controller training, which may correspond to or resemble the above-defined pre-training temporal period, can be automatically determined from those models.

Due to the model-based determination of the simulation parameters a) and/or b), a risk of controllers being over-learned by short simulation periods, and conversely of controllers being pre-learned longer than necessary by long simulation periods can be reduced. It is noted that the RL-based controller may include at least one neural network or at least one other machine learning model whose parameters can be trained by the reinforcement learning. Generally, such a neural network or machine learning model may model a state-action relation determining control actions to be determined by the RL-based controller depending on currently observed states. The states may e.g. include measurable parameters of the space and/or desired set values, as e.g. set by a user.

In one embodiment in which the method comprises at least the determination of parameter a) the extent of past state data is determined based on at last one of the following parameters of the space model and in particular based on a product of these parameters:
- a resistance parameter (R) representing a thermal resistance of the space to heat transfer;
- a capacity parameter (C) representing a thermal capacity of the space to store heat.

For example, a product of these parameters may be used to determine a first time parameter. At least one additional time parameter may be determined, e.g. based on the system model. For example, the additional time parameter may be based on or be equivalent to a parameter of the system model that influences a temporal rate at which the system reaches a target steady state. In case a plurality of AC/HVAC systems that are controlled by the RL-based controller regulate air in a common space, such as a building, such a time parameter may be determined based on each system model of each system. The eventually selected final parameter that defines a timespan corresponding to and/or defining the extent of past state data may be selected from said number of time parameters, in particular as a maximum time parameter out of said number of time parameters.

In a further embodiment in which the method comprises at least the determination of parameter b) the pre-training temporal period is determined based on a parameter of the system model that influences a temporal rate at which the system reaches a target steady state. Additionally or alternatively, the pre-training temporal period may be determined based on the simulation parameter a) and in particular based on or as a product of said parameter and an integer.

According to a further embodiment the space modelled by the space model is a building or is comprised by a building. Accordingly, the space model may also be referred to as a building model.

In one embodiment, the space model comprises a lumped model of the space. This may help to improve determining the simulation parameters in a time-efficient manner.

According to a further example, the method comprises: adjusting at least one parameter of the space model based on data measured for the actual space. Put differently, the model may be fitted to measured data to increase its accuracy.

According to a further example, the method comprises: adjusting at least one parameter of the space model based on a simulated season. For example, during summer the AC/HVAC system can predominantly operate in a cooling mode, whereas during winter it can predominantly operate in a heating mode. This can be taken account of by the above example. For example, the space model may include heat capacity C and/or thermal resistance R as parameters. In practical building simulations, R and C are typically treated as fixed properties of the building materials, meaning they generally do not change with the season or the heating/cooling mode. However, in data-driven models or machine learning-based approaches, such as the present reinforcement learning approach, the parameters optimized during cooling and heating modes may differ. As a result, even though R and C are physically fixed in the actual building, different values for them in cooling and heating scenarios may be learned.

According to a further example, the system model comprises a function describing a temporal rate at which the HVAC system reaches a target steady state.

According to a further example, the past state data comprise historical state data that are pre-stored and/or recorded during previous pre-training iterations. For example, during initial simulation and/or pre-training cycles, pre-stored historical state data may be referred to in the absence of any previously determined and/or simulated state data. Once such data have sufficiently become available, e.g. in form of data recorded during previous pre-training iterations, this can be referred to as past state data.

According to a further example, the method comprises: performing the simulation with the determined at least one simulation parameter, including performing a sequence of pre-training iterations.

According to a further example, the method comprises: controlling the system (e.g. the real-world AC or HVAC system) with the pre-trained controller, in particular wherein the controller is configured to take the same extent of past state data into account during the control as defined by the simulation parameter a). Put differently, the extent of past state data determined by the simulation parameter a) can also be u sed after pre-training during real-world deployment to accurately determine control actions.

According to a further example, the controller is also trained based on its past actions. Accordingly, a further simulation parameter may be considered which concerns an extent of past actions based on which the controller is to be pre-trained. This extent may optionally be flexibly set, e.g. based on the space or system model, and in particular based on or as the saving time length. Specifically, past action variables, which may generally concern a series of commands sent by a controller to devices, are considered within the same length as past state data (e.g. τₛₐᵥₑ discussed below). This setting ensures that the impact of actions of the controller is taken into account while considering hysteresis of a target system, thus enhancing the efficiency of the learning process.

Further disclosed is a reinforcement learning, RL, based controller for an air conditioning, AC, system or a heating, ventilation, and air conditioning, HVAC, system, wherein the controller comprises means for carrying out the method according to any of aspects disclosed herein.

The means of said controller may e.g. comprise at least one processor and/or at least one computer-readable medium on which a computer program is stored, the computer program comprising instructions which, when the program is executed by the processor, cause the processor to carry out the method of any of the disclosed aspects.

The disclosure also concerns an arrangement for determining at least one simulation parameter of a simulation for pre-training a reinforcement learning, RL, based controller for an air conditioning, AC, system or a heating, ventilation, and air conditioning, HVAC, system, the arrangement comprising:
- a controller configured to control the AC or HVAC system,
- a computer operatively connected to the controller,
wherein the arrangement is configured to:
∘ determine at least one simulation parameter for a simulation based on a model representing a space to which the AC or HVAC system is applied, and/or based on a system model, e.g. an AC or HVAC system model,
∘ perform the simulation using the determined at least one simulation parameter.

The simulation parameter is one of:
a) an extent of past state data based on which the controller is to be pre-trained in at least one pre-training iteration of the simulation;
b) a pre-training temporal period that is to be covered by the simulation.

Exemplary embodiments are discussed here below with respect to the attached schematic drawings.
- Figure 1: shows a HVAC system comprising a controller according to an embodiment of this disclosure.
- Figure 2: shows units comprised by a controller according to an embodiment of this disclosure.
- Figure 3: is a basic illustration of reinforcement learning.
- Figure 3a: illustrates how past or future states can be considered according to an embodiment of this disclosure.
- Figure 4: is a schematic illustration of an arrangement according to an embodiment of this disclosure.
- Figure 5: schematically illustrates a space model.
- Figure 6: is a flow chart of a method according to an embodiment of this disclosure.
- Figures 7-10: are various equations referred by the method of Figure 6.

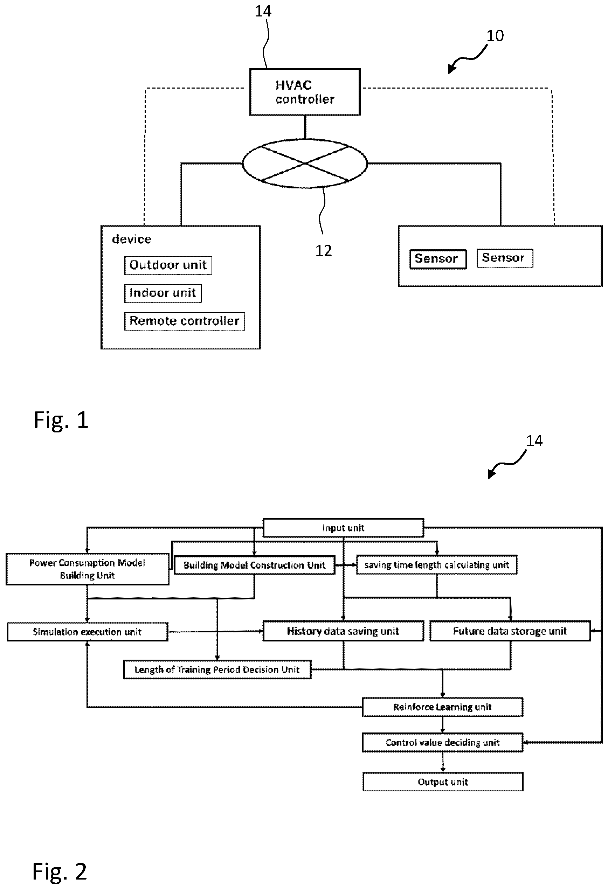

Figure 1 illustrates an HVAC system 10 which, in a generally known manner, processes air of a space 12. The space 12 is or comprises a building e.g. having several rooms and/or floors. The HVAC system 10 comprises a set of devices, comprising in a generally known manner an outdoor unit and indoor unit. Optionally, a remote controller may also be provided enabling a user to remotely control any of said outdoor and indoor unit, e.g. by defining set values for their operation.

The HVAC system 10 further comprises sensors for measuring states of the space 12, such as an indoor temperature and/or a humidity within the space 12 and/or an airflow within the space 12 and/or an electric consumption of the overall HVAC system 10 and/or an air-quality within the space 12. The latter may e.g. be determined based on a carbon dioxide level within the space 12.

The HVAC system 10 further comprises an HVAC controller 14. The HVAC controller 14 is configured to use the above-mentioned set values and/or the sensor signals as state inputs in order to output control signals for controlling the outdoor and/or indoor unit (see dotted lines in Fig. 1). In this way, the HVAC controller 14 at least indirectly acts on the space 12 as schematically illustrated in Figure 1.

In the shown example, the HVAC controller 14 is as a reinforcement learning, RL, based controller. This means that once deployed in the real-world environment to regulate the air within the space 12, the HVAC controller 14 undergoes an ongoing reinforcement learning process. Through this process, the HVAC controller 14 continuously interacts with the environment in the form of the space 12, receiving feedback based on its control actions and refining its control strategy over time. The control actions may e.g. include adjusting temperature set points, altering fan speeds or controlling air conditioning or heating output. The control strategy may generally include how to select control actions in response to observed states.

As generally described with reference to Figure 3, the controller 14 improves its performance by learning from the consequences of its actions to optimize the HVAC system's 10 efficiency and maintain desired conditions within the space 12. Said consequences may generally be reflected by rewards indicated in Figure 3. Such rewards may be determined by a reward function that can consider any factors, such as energy efficiency, occupant comfort, air quality, and system performance, e.g. in terms of achieving and maintaining set temperatures. The controller is trained to maximize the cumulative reward over time by adjusting its actions.

The reinforcement learning algorithm utilized by the controller 14 employs a neural network or another machine learning model to approximate the mapping between the system's states and the corresponding control actions to be taken. The neural network is trained through the above-explained iterative interaction with the environment, wherein it receives state data, outputs control actions, and adjusts its internal mapping model/function based on the reward received from each action.

Specifically, the HVAC controller 14 utilizes reinforcement learning algorithms, such as Q-learning, Deep Q Networks (DQN), Proximal Policy Optimization (PPO), or Deep Deterministic Policy Gradients (DDPG), to refine its decision-making process. These algorithms enable the controller to explore different control strategies and improve performance based on observed outcomes, with the controller's neural network or other machine learning model facilitating state-action relation modeling as previously described.

Figure 2 is an exemplary illustration of several units comprised by the HVAC controller 14, wherein some of these units are merely optional. The below-discussed units may each be software modules, whereas at least the input unit and output unit may also comprise or may at least be connected to hardware interfaces for implementing the described data transmissions.

The HVAC controller 14 comprises an input unit for receiving input data, such as any of the above-explained sensor data which may resemble state data or such as user inputs. These data are forwarded to the below-discussed power consumption model building unit, control value deciding unit and history data saving unit. This way, the control value deciding unit may e.g. receive a user input concerning whether or not to active reinforcement learning and/or whether or not to apply control values determined by active reinforcement learning.

Optionally, the input unit may also receive future data, in particular future state data, that are received based on predictions and/or forecasts. The future data may e.g. be computed based on whether forecasts. The future data are output to a future data storage unit discussed below.

The HVAC controller 14 comprises a power consumption model building unit or, alternatively, a general system model construction unit. For example, the power consumption can be calculated based on a Coefficient of Performance, COP, which is defined as a function of supply capacity Q to a room, said supply capacity typically concerning the rate of thermal energy (heating or cooling) delivered to maintain the room's temperature at a desired level. Specifically, the COP may relate the supply capacity Q to the power input required. In one example, the power consumption may be computed as or may be based on a ratio of Q divided by COP. The power consumption can also be calculated by setting the COP as a constant value, in particular when calculating the mentioned ratio.

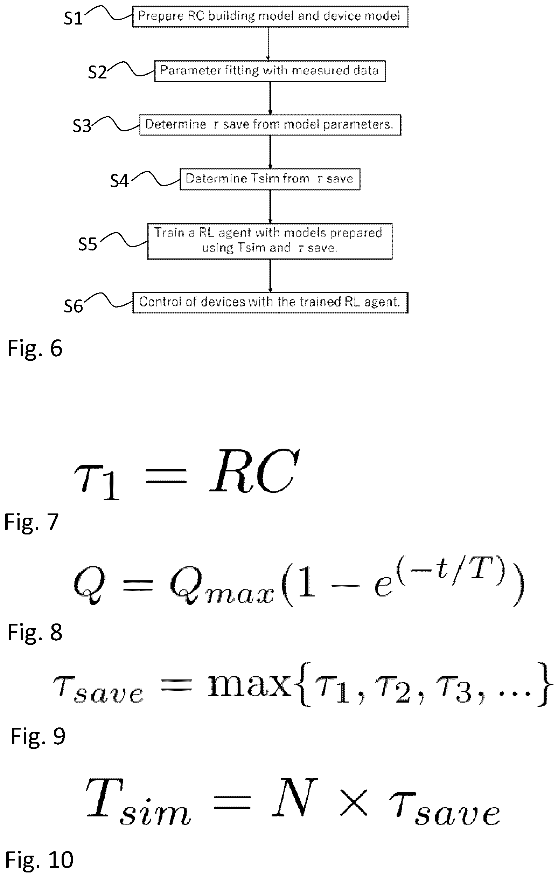

These units generally serve to model the devices of the HVAC system 10 that are used for processing air, such as the indoor unit and/or outdoor unit. This is explained in further detail below with respect to the equation in Figure 8. The power consumption may optionally be part of the system model or may alternatively be omitted. As likewise detailed below with respect to the equations of Figures 7-10, the power consumption model building unit or, alternatively, a system model construction unit outputs information to a saving time length calculating unit based on which the respective saving time length can be calculated.

The HVAC controller 14 further comprises a building model construction unit which could also be referred to as a space model construction unit. This unit is configured to construct a building model as a specific example of a space model, see the below discussion of Fig. 5. The construction may involve receiving at least parts of said model from an external source, such as a server or another computing device.

The HVAC controller 14 further comprises a saving time length calculating unit that receives inputs from the building model construction unit and optionally from the power consumption model building unit or, alternatively, a system model construction unit. Based on the input data, the saving time length calculating unit is configured to determine an extent of past state data based on which the controller is to be pre-trained in at least one pre-training iteration of the simulation. Given that the past state data typically resemble time series data that are stored or saved in order to be used for pre-training the controller, this unit is referred to as calculating a saving time length. Alternatively, it could e.g. be referred to as an extent of past state data calculating unit. For the sake of completeness, it is noted that the pre-training iterations equally refer to a time series or time sequence of a simulated operation of the HVAC controller 14.

The HVAC controller 14 further comprises a simulation execution unit. This unit receives inputs from the optional power consumption model building unit, or, alternatively, a system model construction unit, from the building model construction unit and from a reinforce learning unit. The letter may output simulated and/or internal control actions during a pre-training stage. The simulation execution unit is configured to use these simulated control actions to determine simulated impacts on and thus modified states of a simulated environment on which the HVAC controller 14 acts, e.g. on a space and in particular a building modelled by the building model construction unit. The thus computed simulated states are output by the simulation execution unit to the history data saving unit of the HVAC controller 14.

The history data saving unit is configured to store past state data which may also be referred to as historical data. These state data may concern any actually measured state data received by the input unit, such as indoor temperature and/or a humidity within the space 12 and/or an airflow within the space 12 and/or an electric consumption of the overall HVAC system 10 and/or an air-quality within the space 12. They may be stored as a time series of state data, in particular a continuous time series. During a pre-training involving simulations, state data computed by the simulation execution unit may be stored as historic data.

Optionally, a future data storage unit is further provided. This unit may store the above-explained predicted state data computed e.g. based on weather forecasts.

Both of the history data saving unit and the optional future data storage unit receive the determined time length, i.e. the respectively determined extent of past state data, from the saving time length calculating unit as an input. The amount of data stored or at least the amount of state data output by the history data saving unit and the optional future data storage unit is set in accordance with this determined time length and extent.

Still further, the HVAC controller 14 comprises a length of training period decision unit. This unit is configured to determine a pre-training temporal period that is to be covered by the simulation. It may thus also be referred to as a pre-training temporal period decision unit. The way how said period is decided is discussed below with respect to the equations of Figures 6-9.

The length of training period decision unit, the history data saving unit and optionally the future data storage unit output data to the reinforce learning unit. Specifically, the training period decision unit outputs the determined pre-training temporal period to be covered, whereas the history data saving unit and future data storage unit output a time series of respectively stored state data, wherein the extent or amount of such state data is set in accordance with the calculation result of the saving time length calculating unit.

The reinforce learning unit uses the input data to limit the pre-training to the respective pre-training temporal period. Further, the received historic state data are used as historic data for the simulation, e.g. so that they may be referred for considering a hysteresis along with state data relating to a current instance or iteration.

Generally, reinforcement learning algorithms typically assume the Markov property. This means that state transitions and rewards at each point depend solely on the previous state and the selected action. Under this assumption, past states and actions do not influence future outcomes. Therefore, incorporating hysteresis into RL algorithms requires some ingenuity as discussed below.

One way to account for hysteresis is to extend the current state by including relevant history that affects the next state. By embedding this historical information within the current state, one can account for hysteresis while still preserving the Markov property assumed in reinforcement learning. This approach can also apply to future information, such as forecasts, by including them in the current state to make them actionable in decision-making.

This is further exemplified by Figure 3a. This figure represents the state transition diagram of a Markov Decision Process (MDP), which the presently implemented reinforcement learning is equally based on. In this process, when in state St, an action At is taken according to a policy π (indicated by the dotted line in the figure), transitioning to state St+1 and receiving an immediate reward Rt+1. As shown, the state transitions and rewards at each point usually depend solely on the previous state and the selected action.

Therefore, in systems where past states and past actions can influence state transitions and rewards as is contemplated by this disclosure, these factors can be incorporated into the previous state to influence decision-making.

Based on these inputs, the reinforce learning unit trains the controller e.g. based on Q-learning to output a suitable control action. During pre-training, this control action is output to the simulation execution unit. During real-world deployment, this control action is output to the control variable deciding unit which translates the received control action into a control variable, such a voltage signal, an ON- or OFF-signal or a data flag, suitable for actually controlling devices of the HVAC system. This control variable is eventually output by the output unit.

It is noted that during real world deployment and once the simulation has been completed, at least the simulation execution unit, the power consumption model building unit, the building model construction unit, the saving time length calculating unit and the length of training period decision unit can remain idle. On the other hand, the history data saving unit and the optional future data storage unit can still be updated in terms of stored data. The reinforce learning unit can continue to refer to the stored data to an extent previously determined by the saving time length calculating unit. That is, the same extent of past data as determined when and/or in preparation of conducting the simulation can still be used during real-world deployment to improve control accuracy.

In view of the above, an arrangement 102 according to an alternative embodiment of this disclosure is indicated in Figure 4. The arrangement 102 comprises an HVAC controller 14 and another computing system 100, e.g. an external computer in relation to the HVAC controller 14. As indicated by arrows, the computing system 100 and the HVAC controller 14 are connected to exchange data. The computing system 100 may in particular be provided during a simulation stage when pre-training the HVAC controller 14. For example, the computing system 100 may only selectively be connected to the HVAC controller 14 for performing said simulation stage and pre-training. At least one of the above noted units that are only active during or in preparation of the simulation (i.e. the simulation execution unit, the power consumption model building unit, the building model construction unit, the saving time length calculating unit and the length of training period decision unit) may be implemented in the computing system 100, e.g. as respective software units, instead of in the HVAC controller 14.

Figure 5 is an exemplary space model in the form of a building model as e.g. constructed by the above-explained building model construction unit. The model is a so-called lumped model and generally resembles a reduced order model. As common in lumped models, the depicted model is a simplified mathematical representation used to model thermal characteristics of a space in form of a building, where spatial variations of certain properties are ignored and the system is modeled as a set of discrete, uniform components.

Specifically, the lumped model assumes that the entire space or building can be treated as having a uniform temperature at any given moment in time. In the model, considered thermal properties comprise heat capacity C and thermal resistance R. Environmental states that are taken into account as interacting with the modelled building and that are e.g. measured by sensors concern an outdoor temperature Tₒ and an indoor temperature Tᵢ. The parameter *Q̇s* is representative of an action of the HVAC system 10 in form of a heat input.

Depending on a season and whether the function of the HVAC system 10 during said season predominately concerns cooling or heating, different building models may be selected and/or parameters R and C may be adjusted. For example, the way indoor and outdoor heat loads affect room temperature may differ depending on the season.

Figure 6 is a flowchart of a method according to an embodiment of the invention. In step S1, a building model and a system model are prepared, the latter being referred to as a device model. The building model is referred to as an RC building model to reflect its optional lumped character according to Figure 5 and equation 7.

The building model may e.g. be determined by the above-discussed building model construction unit, whereas the device model may e.g. be determined as a part of and/or as an alternative to the above-explained power consumption model.

In an optional step S2, a parameter fitting of the respectively constructed models with measured data can be included. This way, the models can be more accurately adjusted to measured real-world data according to any known strategies.

In step S3, the saving time length τₛₐᵥₑ, i.e. the extent of past state data, is determined. This is done based on a device model modelling e.g. at least the indoor and/or outdoor unit of the HVAC system 10 and more specifically capabilities thereof e.g. in form of heat transfers. The exemplary equation in Figure 7 shows a first measure for determining the saving time length τₛₐᵥₑ from such a model.

As can be gathered from equation Figure 7, a building-specific parameter τ₁ is calculated from the building model parameters R and C and in particular as a product of these parameters. This has proven to be a suitable measure that yields accurate and useful results. It is noted that the unit of τ₁ when calculated according to equation 7 is seconds.

Further, based on the equation of Figure 8 which resembles a HVAC system model as an example of a device model, further parameters τ₂ and optionally τ₃ are determined. In said equation of Figure 8, Q concerns an amount of heat transferred e.g. at the time t. Qₘₐₓ defines a steady state that is supposed to be reached in terms of heat transfer. T is a time constant that characterizes the speed of the process, e.g. how fast the system reaches equilibrium. T may be determined as or based on a step response time which may be measured or calculated from system specifications. Put differently, the parameter T concerns how quickly the system establishes steady temperature in a given space. The parameter e is the Euler's number.

A parameter τ₂ is equated with T and can again be in the unit of seconds or in another time unit. In case there a plurality of cooperating HVAC systems which are e.g. controlled by the same HVAC controller 14, such a parameter τ equated with T may be determined for each of the systems from each of their system models that are each defined according to the equation in Figure 8. This way, further parameters τ₃ etc. can be determined.

Eventually, the saving time length τₛₐᵥₑ, i.e. the extent of past state data, is determined as a maximum value of any of these parameters τ₂, τ₃, but also τ₁, see the equation of Figure 9. Optionally, it could also be considered to directly equate τₛₐᵥₑ with any of τ₁, τ₂, in particular in case there is no plurality of cooperating HVAC systems.

Accordingly, τₛₐᵥₑ defines the length of a timespan in form of a time series for which or with respect to which state data should be retained and stored. In this way, τₛₐᵥₑ translates into an amount or an extent of data, e.g. depending on a temporal resolution of said data.

In step S4, the pre-training temporal period Tₛᵢₘ that is to be covered by the simulation or, put differently, the simulation time length is determined. According to the equation of Figure 10, this simulation time length Tₛᵢₘ is determined as a product of τₛₐᵥₑ and N, wherein N is an integer. A typical value of N may be set around 2 to 3 or 1 to 4, considering the constraints of computational resources. This selection is intended to avoid overfitting while effectively capturing the hysteresis patterns within the target period.

According to step S5, the RL-based controller 14 (referred to as an RL agent in S5) is thus trained using the parameters τₛₐᵥₑ and Tₛᵢₘ, i.e. based on taking a respective extent τₛₐᵥₑ of historical state data into account during each training iteration and for an overall simulation time length Tₛᵢₘ.

Therefore, by determining the data length corresponding to τₛₐᵥₑ that needs to be retained to account for a hysteresis from the building model and device model parameters, computation time can be reduced. Moreover, the simulation time length Tₛᵢₘ is determined so as to produce meaningful simulation results and thus meaningful pre-training results in a reasonable amount of time.

According to step S6, the respectively controlled HVAC controller 14 (i.e. RL agent) can thus be deployed in the real world for training at least one HVAC system 10. During the deployment, τₛₐᵥₑ may still be applied by the HVAC controller 14.

Also, transfer learning from the simulation to the actual space and/or building may be carried out. This transfer learning can e.g. be done by relearning all the layers in a neural network of the controller used in the simulation-based learning, or it can be done by relearning only an output layer of said neural network.

According to yet another embodiment, the results of a reinforcement learning process according to any of the examples disclosed herein can be shared , e.g. with other controllers and/or HVAC systems. This can e.g. be done via an online cloud, via some other server or via another communication link. For example, if for some other controller the heat source configuration is the same and/or the parameters of the building model are similar to an already existing pre-trained controller, the pre-training of reinforcement learning by simulation can be omitted or can at least be reduced for this other controller, and the desired control policy can be obtained at least partially by a transfer learning. Also, the transfer may be applied to only part and e.g. only certain layers of some already at least partially trained controller, so that its pre-trained knowledge, which may e.g. be derived according to any of the disclosed embodiments, may at least partially be maintained. This enables effective deployment in real environments, adding value to the pre-training process as an additional feature.

## Claims

1. A method for determining at least one simulation parameter of a simulation for pre-training a reinforcement learning, RL, based controller (14) for an air conditioning, AC, system or a heating, ventilation, and air conditioning, HVAC, system (10),
the method comprising determining at least one of the following simulation parameters a) and b) based on a space model which models a space (12) to which the AC or HVAC system (10) is applied and/or based on a AC or HVAC system model:
a) an extent of past state data (τₛₐᵥₑ) based on which the controller (14) is to be pre-trained in at least one pre-training iteration of the simulation;
b) a pre-training temporal period (Tₛᵢₘ) that is to be covered by the simulation.

2. The method of claim 1 comprising at least the determination of parameter a),
wherein the extent of past state data (τₛₐᵥₑ) is determined based on at last one of the following parameters of the space model and in particular based on a product of these parameters:
- a resistance parameter (R) representing a thermal resistance of the space (12) to heat transfer;
- a capacity parameter (C) representing a thermal capacity of the space (12) to store heat.

3. The method of claim 1 or 2,
wherein the simulation parameter b) is determined based on the simulation parameter a) and in particular a product of said parameter and an integer.

4. The method any of the previous claims,
wherein the space (12) is a building or is comprised by a building.

5. The method any of the previous claims,
wherein the space model comprises a lumped model of the space (12).

6. The method of any of the previous claims,
further comprising: adjusting at least one parameter of the space model based on data measured for the actual space (12).

7. The method of any of the previous claims,
further comprising: adjusting at least one parameter of the space model based on a simulated season.

8. The method of any of the previous claims,
wherein the system model comprises a function describing a temporal rate at which the AC or HVAC system (10) reaches a target steady state.

9. The method of any of the previous claims,
wherein the past state data comprise historical state data that are pre-stored and/or recorded during previous pre-training iterations.

10. The method of claim any of the previous claims,
further comprising:
performing the simulation with the determined at least one simulation parameter, including performing a sequence of pre-training iterations.

11. The method of any of the previous claims,
further comprising:
controlling the AC or HVAC system (10)with the pre-trained controller (14), in particular wherein the controller (14) is configured to take the same extent of past state data (τₛₐᵥₑ) into account during the control as defined by the simulation parameter a).

12. The method of any of the previous claims,
wherein the controller (14) is also trained based on its past actions.

13. A reinforcement learning, RL, based controller (14) for an air conditioning, AC, system or a heating, ventilation, and air conditioning, HVAC, system (10), wherein the controller (14) comprises means for carrying out the method according to any of claims 1-12.

14. The controller (14) of claim 13,
wherein the means comprise at least one processor and at least one computer-readable medium on a computer program is stored, the computer program comprising instructions which, when the program is executed by the processor, cause the processor to carry out the method of claim 1.

15. Arrangement (102) for determining at least one simulation parameter of a simulation for pre-training a reinforcement learning, RL, based controller (14) for an air conditioning, AC, system or a heating, ventilation, and air conditioning, HVAC, system (10), the arrangement (102) comprising:
• a controller (14) configured to control the AC or HVAC system (10),
• a computer (100) operatively connected to the controller (14),
wherein the arrangement (102) is configured to:
o determine at least one simulation parameter for a simulation based on a model representing a space (12) to which the AC or HVAC system (10) is applied, and/or based on an AC or HVAC system model,
o perform the simulation using the determined at least one simulation parameter,
wherein the simulation parameter is one of:
a) an extent of past state data (τₛₐᵥₑ) based on which the controller (14) is to be pre-trained in at least one pre-training iteration of the simulation;
b) a pre-training temporal period (Tₛᵢₘ) that is to be covered by the simulation.
